(19) Europäisches Patentamt
European Patent Office
Office européen des brevets

(11) **EP 2 443 566 B1**

(12) **FASCICULE DE BREVET EUROPEEN**

(45) Date de publication et mention de la délivrance du brevet:
**20.02.2019 Bulletin 2019/08**

(21) Numéro de dépôt: **10724090.5**

(22) Date de dépôt: **15.06.2010**

(51) Int Cl.:
***G06F 17/30*** *(2006.01)*

(86) Numéro de dépôt international:
**PCT/EP2010/058416**

(87) Numéro de publication internationale:
**WO 2010/146066 (23.12.2010 Gazette 2010/51)**

(54) **PROCEDE DE SELECTION DE VERSIONS D'UN DOCUMENT PARMI UNE PLURALITE DE VERSIONS REÇUES A LA SUITE D'UNE RECHERCHE, ET RECEPTEUR ASSOCIE**

VERFAHREN ZUR SELEKTION EINER VARIANTE EINES DOKUMENTS AUS EINER MEHRZAHL VON VERSIONEN DES DOKUMENTS WELCHES BEI EINER SUCHE GEFUNDEN WURDE

METHOD OF SELECTING VERSION OF A DOCUMENT FROM A PLURALITY OF VERSIONS OF SAID DOCUMENT RECEIVED AFTER A SEARCH

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **19.06.2009 FR 0954142**

(43) Date de publication de la demande:
**25.04.2012 Bulletin 2012/17**

(73) Titulaire: **InterDigital Madison Patent Holdings 75017 Paris (FR)**

(72) Inventeurs:
• **URBAN, Fabrice**
  **35235 Thorigne Fouillard (FR)**
• **LE MEUR, Olivier**
  **35160 Talensac (FR)**
• **CHAMARET, Christel**
  **35135 Chantepie (FR)**
• **NINASSI, Alexandre**
  **14320 Saint-Martin de Fontenay (FR)**
• **CHEVET, Jean-Claude**
  **35830 Betton (FR)**

(74) Mandataire: **de la Fouchardière, Marie-Noëlle et al InterDigital CE Patent Holdings 20, rue Rouget de Lisle 92130 Issy-les-Moulineaux (FR)**

(56) Documents cités:
**WO-A1-2009/003124    US-A- 6 003 030 US-A1- 2002 099 695**

**Description**

La présente invention concerne un procédé de sélection d'une version d'un document audiovisuel parmi une pluralité de versions reçues à la suite d'une recherche, et un appareil apte à mettre en oeuvre le procédé.

De nos jours, il est existe de nombreux moyens différents pour recevoir un contenu audio et/ou visuel. Le plus simple consiste à connecter un appareil de réception à un réseau et de demander une recherche du document souhaité. Des moteurs de recherche intégrés au réseau permettent de recevoir un identifiant d'un document, et de lancer des requêtes vers un grand nombre de terminaux possédant une capacité de stockage. La requête contient le nom de l'identifiant du document, le terminal analyse sa mémoire afin d'y chercher le document en question. S'il n'y est pas le terminal répond à la requête par une simple réponse négative. Si par contre, le document est accessible dans le terminal, celui-ci répond en indiquant qu'il peut transmettre ledit document. Le terminal demandeur du document reçoit un premier message indiquant que l'on peut télécharger le document. L'utilisateur valide ou non ce choix.

Certains terminaux envoient des informations supplémentaires sur le document, comme la place qu'il occupe en mémoire ou le logiciel de codage utilisé. En fonction de ces informations, l'utilisateur peut déterminer s'il veut toujours télécharger ce document ou son terminal n'est pas adapté pour recevoir et reproduire ce document. Si la réponse est négative, l'utilisateur peut lancer une seconde recherche en rajoutant un nouvel élément pour mieux identifier le document dans sa requête.

Habituellement, la procédure de recherche s'interrompt lorsque le réseau a trouvé la première occurrence du document. D'autres moteurs de recherche transmettent les requêtes de recherche jusqu'à ce que le terminal demandeur cesse de demander des documents. Le terminal du demandeur présente alors à l'écran un menu avec les informations sur les différents documents identifiés. L'utilisateur peut choisir le document, se connecte au site qui le propose et le télécharge dudit site.

L'utilisateur ne peut pas savoir au préalable ce que sa recherche va lui fournir. Il est possible qu'un grand nombre de documents correspondent à sa recherche et soient affichés sur l'écran de son terminal. Les informations complémentaires permettent d'aider l'utilisateur à choisir. Quelquefois, le moteur de recherche coté serveur propose un classement selon la pertinence des informations complémentaires associées aux différents documents. L'utilisateur peut donc soit lire les informations complémentaires de chaque document, ou simplement choisir le premier choix que lui propose le moteur de recherche.

Cependant, les choix sont indiqués par le moteur de recherche et ne sont pas nécessairement conformes à ce qu'attend l'utilisateur.

Le document WO 2009/003124 déposé par SEEQPOD décrit un ordinateur capable d'envoyer une requête de recherche sur le réseau et d'enregistrer des documents. La requête est basée sur des mots clefs et permet de repérer des documents, ces documents peuvent donc être similaires. Le récepteur évalue les documents téléchargés en fonction des mots clefs associés et sélectionne les documents qui correspondent le mieux aux critères. Les différents documents sont affichés sous la forme d'une « play list ». Ce document enseigne d'émettre une requête pour recevoir une seule version du document demandé. Si la version reçue n'est pas de bonne qualité, il faut lancer une nouvelle requête au risque de recevoir le même contenu et donc de mécontenter l'utilisateur,

La présente invention permet de présenter à l'utilisateur plusieurs versions différentes d'un même document afin de lui permettre de choisir la version qui correspond le mieux à ses critères de qualité.

L'invention concerne un procédé de sélection d'une version parmi une pluralité de versions d'un document comprenant une étape d'introduction d'un identificateur dudit document au niveau d'un récepteur connecté à au moins un réseau de communication, et une étape de lancement d'une recherche pour recevoir la pluralité de versions du document identifié dans le récepteur ; caractérisé en ce qu'il comporte :

une étape préalable de réception d'une pluralité de versions au moins partielles dudit document au sein du récepteur, une étape ultérieure d'analyse de chaque version reçue par une pluralité de modules d'évaluation présents dans le récepteur, chaque module calculant une valeur d'évaluation de la version reçue selon un critère déterminé, une étape de sélection pour chacun des modules d'évaluation des identificateurs des versions ayant les meilleures valeurs d'évaluations selon chaque critère et affichage desdits identificateurs de versions, une étape d'introduction d'une commande de sélection d'un des identificateurs affichés et reproduction de la version associée à cet identificateur.

De cette façon, l'utilisateur perçoit rapidement la version du document souhaité qui correspond le mieux à certains critères évalués par son récepteur et peut facilement et rapidement sélectionner cette version.

Selon un perfectionnement, le récepteur attend les résultats de la recherche pendant une certaine durée. De cette façon, il est possible de recevoir des versions de document en provenance de réseaux plus lents, ou en provenance de réseaux de diffusion. Selon un autre perfectionnement, l'étape d'analyse ne commence qu'à la fin de la temporisation, aucune version reçue ultérieurement n'est prise en compte. De cette manière, les étapes d'analyse peuvent être lancées une seule fois à la fin de la temporisation.

Selon un autre perfectionnement, la méthode comporte une étape de calcul de la somme de valeurs d'évaluations élaborées par chaque module et une étape de sélection d'une seule version dont la somme des valeurs d'évaluations est la plus importante. De cette façon, le récepteur peut proposer à l'utilisateur une version qui répond le mieux à l'ensemble des critères que son récepteur peut évaluer. Selon un autre perfectionnement, lors du calcul de la somme des valeurs évaluations, certaines valeurs d'évaluations au moins sont multipliées avec des valeurs définies par l'utilisateur de façon à attribuer plus ou moins d'importance à certains critères. De cette façon, la version qui répond le mieux à l'ensemble des critères peut dépendre de préférences de l'utilisateur.

Selon un autre perfectionnement, la version reçue est fractionnée en une pluralité d'intervalles temporels de même durée au cours de laquelle une note d'évaluation fragmentaire est calculée. La note d'évaluation de la version reçue est la moyenne des notes fragmentaires. De cette façon, l'évaluation s'effectue sur toute la durée de la version reçue et de façon équitable. Selon un autre perfectionnement, la note d'évaluation fragmentaire acquiert plus d'importance pour le calcul de la note globale d'évaluation si l'intervalle de temps associé correspond à un moment important du document. De cette façon, l'évaluation prend en compte l'importance de certain moment.

Selon un autre perfectionnement, la version du document provient d'un réseau de diffusion. Les paramètres qui permettent de recevoir la version sont préalablement reçus du réseau de communication en réponse à la recherche. De cette façon, l'utilisateur peut aussi recevoir des versions qui proviennent d'un autre réseau que celui qui a permis de lancer la recherche.

La présente invention concerne également un appareil de visualisation d'une pluralité de versions d'un document comprenant un moyen d'introduction d'un identificateur d'un document et un moyen d'émission d'une requête de recherche vers au moins un réseau de communication pour recevoir la pluralité du document identifié ; caractérisé en ce qu'il comporte :

un moyen de réception au moins partielles d'une pluralité de versions dudit document identifié, ledit moyen de réception étant activé ultérieurement à l'émission de la requête de recherche,

une pluralité de modules d'évaluation permettant chacun de calculer une valeur d'évaluation de chaque version reçue selon un critère déterminé,

un moyen d'affichage des identificateurs des versions ayant les meilleures valeurs d'évaluations selon chaque critère, le moyen d'introduction d'une commande permettant de sélectionner une des versions sélectionnées par un module et de lancer la reproduction de la version sélectionnée.

D'autres caractéristiques et avantages de l'invention apparaîtront à travers la description d'un exemple de réalisation non limitatif de l'invention, explicité à l'aide des figures jointes, parmi lesquelles :

- la figure 1 est un diagramme bloc d'un système de réception et d'enregistrement de documents audiovisuels selon un présent exemple de réalisation ;
- la figure 2 représente un organigramme montrant l'enchaînement des étapes pour lancer la recherche et évaluer les versions de document reçues ;
- la figure 3 est un exemple de représentation d'une apparence d'écran montrant la sélection par les modules d'évaluation des meilleures versions selon les critères d'évaluation desdits modules ;
- la figure 4 est un autre exemple de représentation d'une apparence d'écran montrant les meilleures versions retenues par les modules d'évaluation.

Pour faciliter la description, l'invention sera décrite ci-après dans le cadre de la recherche et de l'utilisateur d'un document multimédia (enregistrement, reproduction, transmission vers un autre utilisateur, ...) . Par document multimédia, il faut comprendre tout document audio et/ou visuel que l'on peut télécharger à l'aide d'un identificateur. Le document peut être une photographie dont une partie est téléchargeable par une requête, et dont la totalité est transmise en haute définition après paiement.

Selon le présent exemple de réalisation, le récepteur pour la mise en oeuvre de l'invention peut être un ordinateur, mais tout récepteur prévu pour la réception de données vidéo numériques à l'aide d'une connexion à un réseau de communication bidirectionnelle, Internet par exemple, peut convenir.

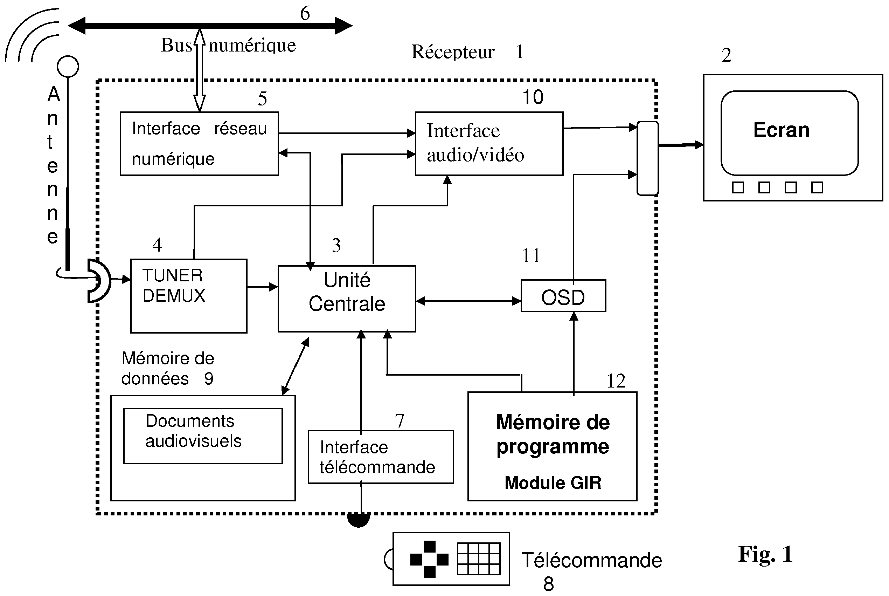

La figure 1 est un diagramme bloc d'un récepteur 1 capable de recevoir et d'enregistrer des documents multimédias. Si le récepteur 1 n'est pas déjà équipé d'un moyen d'affichage, il envoie des signaux d'affichage à un écran de visualisation 2. Le récepteur 1 possède une unité centrale 3 relié à un circuit de communication bidirectionnel 5 pour la transmission de données à travers un bus numérique à haut débit 6. Ce bus permet de transmettre des requêtes de recherche vers des serveurs distants et de recevoir des données audiovisuelles en vue d'un stockage. Ce réseau est par exemple Internet. Les sections ou paquets audio et/ou vidéo sont stockés dans des zones prédéfinies d'une mémoire de données 9. La mémoire 9 est typiquement un disque dur d'une capacité minimale de 80 giga-octets. Si nécessaire, les informations sont tout d'abord déchiffrées par un circuit déchiffreur en fonction des droits de l'utilisateur, avant d'être stockées dans la mémoire 9. Le récepteur comporte également une logique de décodage audio/vidéo 10 pour la génération des signaux audiovisuels envoyés à l'écran de télévision 2, et éventuellement une mémoire 12 contient le logiciel d'exploitation du récepteur et des applications spécifiques. Selon le présent exemple, la mémoire 12 contient au moins un module interface utilisateur appelé « Guide Intelligent de Recherche » ou GIR en abrégé. Pour la clarté du schéma, la mémoire 12 est représentée sous la forme d'un seul bloc, mais comporte à la fois de la mémoire vive, de la mémoire morte et de la mémoire persistante reprogrammable (par exemple de type 'Flash').

Le récepteur 1 comporte également une interface infrarouge 7 d'une télécommande 8, ladite interface étant également reliée au microprocesseur 3. La télécommande est dotée des touches de navigation ↑, ↓, → et ←, « Enregistrement» et une touche de validation « OK » dont nous verrons plus tard les fonctions respectives. L'utilisation de touches de navigation ne limite en rien l'invention à ce type de touches, l'utilisation de touches de direction «Haut» et «Bas» ou d'une souris, ou tout autre moyen de pointage pour naviguer sur une liste affichée est tout à fait envisageable

Un générateur de caractères 11, appelé souvent circuit OSD, de l'Anglais "On Screen Display" (signifiant littéralement "affichage sur l'écran") permet la génération de menus de commande ou de graphiques relatifs aux paramètres du récepteur ou à une application particulière. Le signal vidéo généré par ce générateur de caractères est multiplexé avec l'un des signaux vidéo en provenance des moyens de réception 4 ou de l'interface 5 avec le réseau numérique vers une prise Péritel (prise SCART en anglais) reliée à l'écran de visualisation 2.

De façon optionnelle, le récepteur 1 est relié à une antenne, elle-même reliée à un moyen de réception 4 qui comprend un tuner qui fournit un signal à un démodulateur, les données reçues sont corrigées par un circuit correcteur et transmises à un démultiplexeur. Le démultiplexeur comporte un certain nombre de filtres programmés par une unité centrale 3 en fonction des diverses applications supportées par le récepteur 1. Les filtres correspondent à une information d'identification présente dans l'en-tête des paquets du signal démodulé.

Après avoir détaillé les principaux éléments mettant en oeuvre l'invention selon un exemple de réalisation, nous allons maintenant expliquer comment ceux-ci coopèrent.

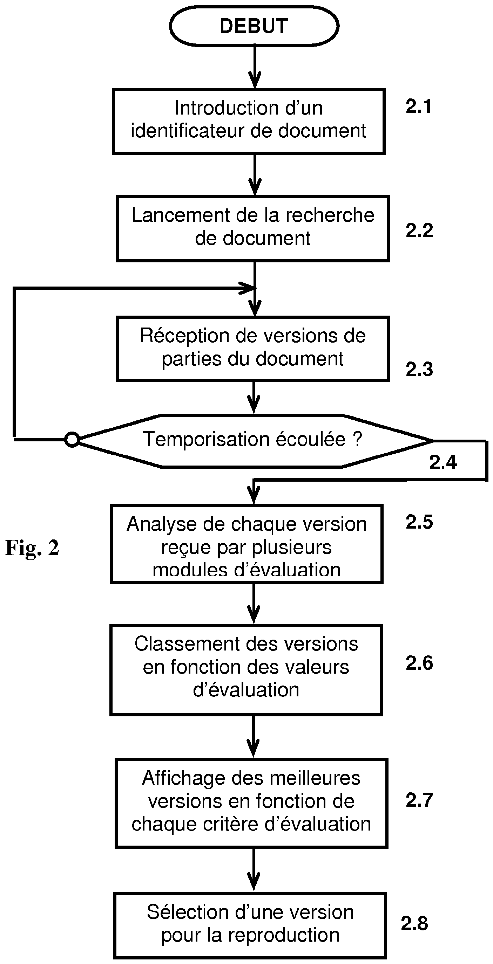

La figure 2 montre les principales étapes de l'exécution d'une recherche et la présentation des résultats par le module GIR. Dans un premier temps (étape 2.1), l'utilisateur introduit le nom d'un identificateur de document. Ce nom peut être le titre du document, mais aussi une suite de caractères permettant d'identifier de façon certaine le document. Par exemple, l'utilisateur peut introduire le nom de « film Titanic », ou « film très grand succès de James Cameron nom d'un bateau ». L'introduction peut s'effectuer sur un clavier alphabétique ou à l'aide d'une télécommande en sélectionnant les icones correspondant aux lettres composant le nom de l'identificateur. A l'étape 2.2, l'utilisateur lance la recherche, le module GIR transmet alors sur le réseau une requête demandant des versions du document identifié par le nom introduit. Une version est un contenu multimédia dont le contenu est similaire à celui du document identifié dans la requête de recherche. Ce sont généralement des copies plus ou moins bonnes du document identifié. Puis le récepteur se configure en mode d'attente de réponse (étape 2.3). Selon un premier mode de réalisation, à l'étape 2.4, le récepteur attend pendant une durée déterminée les résultats de la recherche avant des les traiter. L'utilisateur peut paramétrer la durée d'attente des résultats par un menu de configuration, la possibilité d'attendre des résultats permet notamment de recevoir des documents provenant d'un réseau de diffusion. Les résultats peuvent être le document complet, ou une partie significative du document, par exemple un extrait de trois minutes. La réception d'un document complet est préférable pour une analyse complète du document, mais ce n'est pas toujours possible, car certaine version du document peuvent être payante, seul un extrait est disponible.

Lorsque la temporisation est écoulée, le module GIR analyse les résultats à l'aide de différents modules d'analyse (étape 2.5). Ces modules d'analyse évaluent chaque version du document selon un critère standard. Ces modules sont téléchargeables et peuvent être mis à jour dans le module GIR, de sorte que chaque récepteur doté du module GIR peut évaluer de la même manière les versions de document reçues. Chaque module délivre une note de 0 à 20 par exemple, indiquant la qualité d'une version du document en fonction du critère. Chaque module d'évaluation est connu en soi, on trouve par exemple :

- module d'évaluation de la définition des images (SD, HD, ..),
- module d'évaluation du flou (en Anglais « blurness »),
- module d'évaluation d'effet de blocs, (en Anglais « blockiness »),
- module d'évaluation du contraste,
- module d'évaluation de la qualité de l'audio (présence de bruit),
- etc...

Selon un perfectionnement, la note prend en compte le temps de la dégradation selon le critère associé au module. Prenons par exemple le critère de la qualité de l'audio, si les données transportant l'audio de la version reçue sont fortement dégradées pendant cinq minutes sur un document d'une durée d'une heure, alors la dégradation n'est que momentanée, et la note d'évaluation finale de la version reçue est globalement positive. Une façon de faire consiste à fragmenter la version reçue en intervalle temporel de même durée, par exemple une minute. Au cours de cet intervalle de temps, une note d'évaluation fragmentaire est calculée. La note d'évaluation globale de la version reçue est alors la moyenne des notes fragmentaires. La formule pour calculer la note d'évaluation globale est :

$$Q = \frac{1}{N} \times \sum_{i=1}^{N} q_i$$

Où qi est la note d'évaluation fragmentaire pour le fragment i,
N est le nombre total de fragments,
Et Q est la note d'évaluation globale.

Selon un autre perfectionnement lié au précédent perfectionnement, la note prend en compte le fait que la dégradation intervient au cours d'un ou plusieurs intervalle temporel et que ces intervalles important pour la compréhension ou le déroulement du document. Un moment important est par exemple dans un évènement sportif les 30 secondes qui précèdent un brusque accroissement du bruit. Si la dégradation intervient un tel moment, la note est minorée. La formule pour calculer la note d'évaluation globale est alors :

$$Q = \frac{1}{\sum_{i=1}^{N} a_i} \times \sum_{i=1}^{N} a_i \times q_i \, ,$$

Où qi est la note d'évaluation fragmentaire pour le fragment i, et
ai est la valeur d'importance de l'intervalle temporel i du document.

La valeur d'importance du moment peut être basée sur l'utilisation d'une carte de saillance (en Anglais : « saliency map »). La carte de saillance permet d'adapter la note de qualité en fonction de la position des défauts sur l'image. Par exemple un défaut localisé sur un visage peut avoir un impact plus gênant que sur le fond ou sur le décor. La note de qualité qi par fragment peut directement prendre en compte la saillance spatiale. Selon une variante, la version reçue est déjà segmentée et des informations de service fournissent la valeur d'importance de chaque segment . Dans ce cas, le module GIR utilise les valeurs associées à chaque segment pour calculer la note d'évaluation globale.
A l'étape 2.6, le module GIR classe les différentes versions de document selon la note délivrée par chaque module. Selon un mode préféré de réalisation, chaque module d'évaluation sélectionne un document qui a été évalué avec la meilleure note. A l'étape 2.7, le module GIR affiche à l'écran les identificateurs de chacun des documents sélectionnés par les modules en indiquant les notes fournies par les modules d'évaluation à l'écran. L'utilisateur peut ainsi choisir le document qui lui convient le mieux en fonction de chaque critère d'évaluation. A l étape 2.8, l'utilisateur sélectionne une version du document, et s'il a été entièrement téléchargé, sa reproduction commence aussitôt. Si le document n'est pas complet, un message est affiché signalant un temps d'attente et éventuellement, le moment où cette version du document sera disponible. Si le document est sélectionné en vue d'un enregistrement uniquement, le module GIR avertit l'utilisateur du moment où il sera entièrement enregistré.
Selon une variante, lors de chaque réception d'une nouvelle version, le module GIR évalue l'ensemble des versions reçues afin de les classer selon les critères d'évaluation. L'affichage est ainsi mis à jour au fil du temps, l'utilisateur doit arrêter manuellement la recherche en introduisant une commande. Cette variante est particulièrement utile lorsque l'on a accès à des réseaux de diffusion susceptible de diffuser une version du document à un moment non connu.

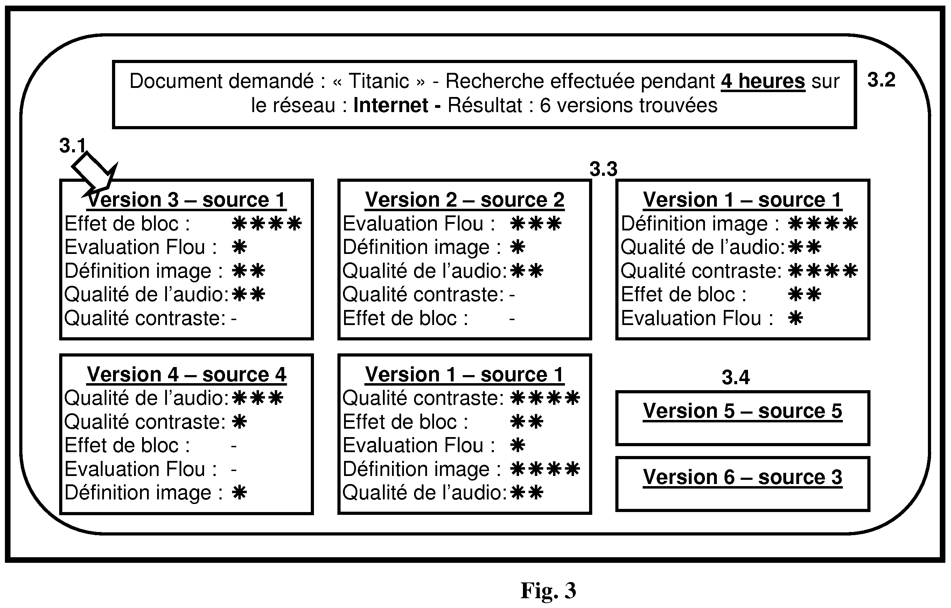

La figure 3 montre une apparence d'écran générée par le logiciel GIR affichant des notes d'évaluation des différentes versions du document reçues. Un curseur 3.1 permet de sélectionner les différents éléments du menu. L'utilisateur déplace le curseur 3.1 à l'aide d'un moyen de pointage tel que des touches de direction ou une souris. Le menu comporte un bandeau supérieur 3.2 où s'affiche le titre du document demandé et les informations sur les conditions d'exécution de la recherche : typiquement le temps et le ou les réseaux sur laquelle elle a été lancée, ainsi que le nombre de versions trouvées. Une zone 3.3 présente les résultats de la recherche. Chaque version est présentée en lui associant les notes d'évaluation fournis par les modules, dans l'ordre en commençant par les notes les plus hautes. Chaque version est identifiée par un numéro et par sa source, par exemple le site dans lequel cette version a été ou peut être téléchargée. La version « Version 1 - source 1 » est celle qui a la meilleure évaluation pour le critère de la définition des images (SD, HD, ..). La version « Version 2 - source 2 » est celle qui a la meilleure évaluation pour le critère des images floues. La version « Version 3 - source 1 » est celle qui a la meilleure évaluation pour le critère d'effet de bloc, c'est-à-dire qu'il contient le moins de blocs de données erronés. La version « Version 1 - source 1 » est aussi celle qui a la meilleure évaluation pour le critère du contraste, et la version « Version 4 - source 4 » est celle qui a la meilleure évaluation pour le critère de la qualité de la bande son. Les deux dernières versions qui n'ont pas les meilleures évaluations selon aucun des cinq modules, sont aussi accessibles par deux icônes affichées dans une zone 3.4.

Cette présentation des versions permet à l'utilisateur de connaître immédiatement la version qui est la meilleure selon chacun des critères d'évaluation. Il peut alors rapidement choisir la version qui correspond le mieux à ses préférences. L'utilisateur positionne alors le curseur 3.1 sur la version qu'il souhaite voir et appuie sur la touche « Enter » du clavier ou de la télécommande, la version du document est alors reproduit et apparaît en plein écran. Si le document est de type audio, la version sélectionnée est immédiatement reproduite sur des haut-parleurs.

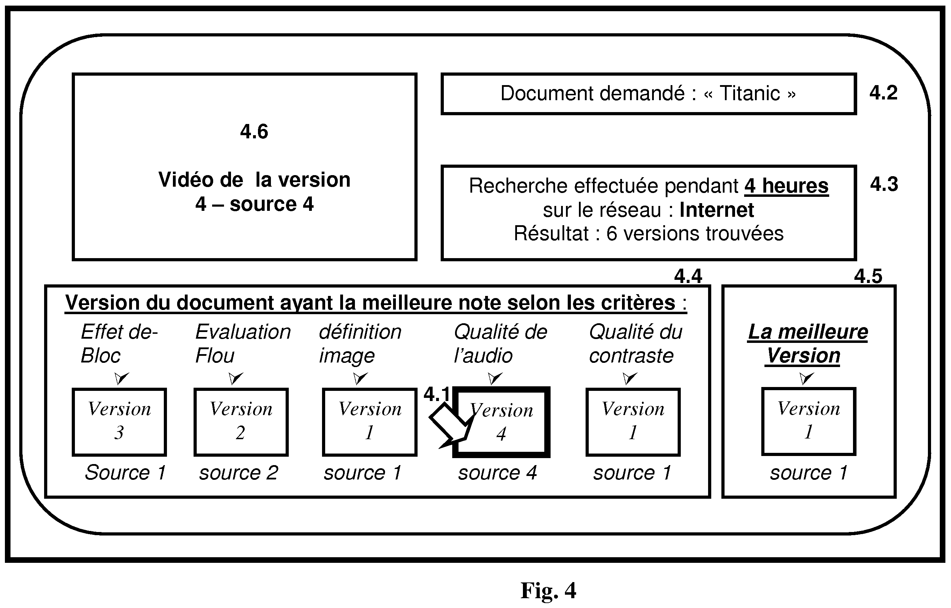

La figure 4 montre une autre apparence d'écran générée par le logiciel GIR affichant les versions de document qui ont les meilleures notes d'évaluation. Le curseur 4.1 permet de sélectionner les différents éléments du menu. Le menu comporte un bandeau supérieur 4.2 où s'affiche le titre du document demandé et une zone 4.3 informant les conditions d'exécution de la recherche. On voit que six versions ont été reçues, mais comme il n'existe que cinq modules d'évaluation, cinq versions au plus sont accessibles par ce menu. Une zone 4.4 présente les résultats de la recherche.

Chaque module d'évaluation est représenté par une icône ou un libellé dans la zone 4.4. On trouve ainsi la liste des cinq modules d'évaluation : définition des images, flou, effet de blocs, contraste, qualité de l'audio. Associé à chaque module, la figure 4 présente un cadre où s'inscrit un identifiant de la version trouvée par la recherche, et la source qui permet ou qui a permis de télécharger cette version. Une zone 4.6 affiche la vidéo de la version qui se trouve sous le curseur 4.1, et si l'utilisateur appuie sur la touche « Enter », alors cette version est reproduite et apparaît en plein écran.

Un perfectionnement consiste à présenter aussi la version reçue qui possède la meilleure note en prenant en compte tous les critères. L'identificateur de cette version document apparaît à droite dans une zone 4.5. Dans le cas de la figure 4, c'est la version « Version 1 - source 1 » qui est la meilleure pour les critères de définition d'image et pour la qualité du contraste. Selon un mode simple de réalisation, les notes d'évaluation de chaque version reçue sont additionnées, et la meilleure version est celle qui possède la somme la plus élevée. De cette façon, si l'utilisateur n'a pas le temps d'étudier séparément l'ensemble des résultats, il peut par défaut sélectionner la version que le module GIR considère globalement comme la meilleure.

Selon un perfectionnement associé au précédent perfectionnement, l'utilisateur peut paramétrer chaque module en indiquant ses préférences. Le module GIR attribue alors des coefficients à chaque note d'évaluation dont la valeur dépend de l'importance de ce critère d'évaluation pour l'utilisateur. En sommant les notes d'évaluation, le module GIR multiplie chaque note avec un coefficient d'autant plus élevé que le critère évalué par le module est important de l'utilisateur.

Prenons l'exemple illustré par la figure 4, pour déterminer « la meilleure version reçue », le module GIR prend en compte les notes attribuées par les cinq modules d'évaluation pour chaque version reçue. L'utilisateur a ordonné la liste préféré des critères de la façon suivante :

$1^{ier}$ : effet de blocs
$2^{nd}$ : évaluation du flou
$3^{ième}$ : définition des images
$4^{ième}$ : qualité de l'audio
$5^{ième}$ : contraste

Selon ce perfectionnement, les cinq critères d'évaluation sont présentés dans la zone 4.4 selon l'ordre défini par l'utilisateur. Le principal avantage de ce perfectionnement consiste en ce que le module GIR associe chaque note produite par chacun de ces cinq modules avec les coefficients suivants : 1.4, 1.3, 1.2, 1.1 et 1.

De ce fait l'évaluation globale d'une version est la somme:

$$\text{Somme} = (1.4 \times \text{Note d'évaluation d'effet de blocs}) +$$
$$(1.3 \times \text{Note d'évaluation du flou}) +$$
$$(1.2 \times \text{Note sur la définition des images}) +$$
$$(1.1 \times \text{Note sur la qualité de l'audio}) +$$
$$\text{Note évaluant le contraste.}$$

La version dont la somme est la plus grande est considérée comme la meilleure et son identificateur apparaît dans la zone 4.5.

EP 2 443 566 B1

Selon un perfectionnement, le récepteur a accès par son moyen de réception 4 à au moins un réseau de diffusion numérique. Le récepteur analyse alors les informations de service signalant les documents qui seront diffusés à un moment déterminé sur un canal déterminé. A l'heure spécifiée, le terminal se connecte sur le canal et peut ainsi télécharger une nouvelle version du document.

Des personnes versées dans l'art pourront adapter la présente invention sous de nombreuses autres formes spécifiques sans l'éloigner du domaine d'application de l'invention comme revendiqué. En particulier, le récepteur électronique peut être tout appareil disposant d'un moyen de réception d'un document venant d'un réseau et d'une mémoire de stockage dans laquelle le document peut être téléchargé. Par conséquent, les présents modes de réalisation doivent être considérés à titre d'illustration mais peuvent être modifiés dans le domaine défini par la portée des revendications jointes.


**Revendications**

1. Procédé de sélection d'une version parmi une pluralité de versions d'un document comprenant une étape d'introduction (2.1) d'un identificateur dudit document au niveau d'un récepteur (1) connecté à au moins un réseau de communication (6), et une étape de lancement (2.2) d'une recherche pour recevoir la pluralité de versions du document identifié dans le récepteur ; **caractérisé en ce qu'**il comporte :

   une étape préalable de réception (2.3) d'une pluralité de versions au moins partielles dudit document au sein du récepteur (1),
   une étape ultérieure d'analyse (2.5) de chaque version reçue par une pluralité de modules d'évaluation présents dans le récepteur (1), chaque module calculant une valeur d'évaluation de la version reçue selon un critère de qualité déterminé,
   une étape de sélection (2.6) pour chacun des modules d'évaluation des identificateurs des versions ayant les meilleures valeurs d'évaluations selon chaque critère et affichage (2.7) desdits identificateurs de versions,
   une étape d'introduction (2.8) d'une commande de sélection d'un des identificateurs affichés et reproduction de la version associée à cet identificateur.

2. Procédé de sélection de version d'un document selon la revendication 1 ; **caractérisé en ce qu'**il comporte une étape de temporisation au cours de laquelle le récepteur attend les résultats de la recherche, l'étape ultérieure d'analyse ne commence qu'à la fin de la temporisation, aucune version reçue ultérieurement n'est prise en compte.

3. Procédé de sélection de version d'un document selon la revendication 1 ou 2 ; **caractérisé en ce qu'**il comporte une étape de calcul de la somme de valeurs d'évaluation élaborées par chaque module, et une étape de sélection d'une seule version dont la somme des valeurs d'évaluations est la plus importante.

4. Procédé de sélection de version d'un document selon la revendication 3 ; **caractérisé en ce que** lors du calcul de la somme des valeurs d'évaluation, certaines valeurs d'évaluation au moins sont multipliées avec des valeurs définies par l'utilisateur de façon à attribuer plus ou moins d'importance à certains critères.

5. Procédé de sélection de version d'un document selon l'une quelconque des revendications précédentes ; **caractérisé en ce que** chaque version reçue est fractionnée en une pluralité d'intervalles temporels de même durée au cours desquels une note d'évaluation fragmentaire est calculée, la note d'évaluation de la version reçue étant la moyenne des notes fragmentaires.

6. Procédé de sélection de version d'un document selon la revendication 5 ; **caractérisé en ce que** la note d'évaluation fragmentaire acquiert plus d'importance pour le calcul de la note d'évaluation si l'intervalle de temps associé correspond à un moment important du document.

7. Appareil (1) de visualisation d'une pluralité de versions d'un document comprenant un moyen d'introduction (7, 8) d'un identificateur d'un document et un moyen d'émission (5) d'une requête de recherche vers au moins un réseau de communication pour recevoir la pluralité du document identifié ; **caractérisé en ce qu'**il comporte :

   un moyen de réception (5, 4) au moins partielles d'une pluralité de versions dudit document identifié, ledit moyen de réception (5,4) étant activé ultérieurement à l'émission de la requête de recherche,
   une pluralité de modules d'évaluation (3, 12) permettant chacun de calculer une valeur d'évaluation de chaque version reçue selon un critère de qualité déterminé,

7

un moyen d'affichage (3,12, 11, 12) des identificateurs des versions ayant les meilleures valeurs d'évaluations selon chaque critère, le moyen d'introduction (7, 8) d'une commande permettant de sélectionner une des versions sélectionnées par un module et de lancer la reproduction de la version sélectionnée.

8. Appareil (1) de visualisation d'une pluralité de versions d'un document selon la revendication 7 ; **caractérisé en ce qu'**il comporte un temporisateur définissant une durée au cours de laquelle l'appareil attend les résultats de la recherche, la pluralité de modules d'évaluation (3, 12) n'étant activés qu'à la fin de la durée, aucune version reçue ultérieurement n'est prise en compte.

9. Appareil (1) de visualisation d'une pluralité de versions d'un document selon la revendication 7 ou 8 ; **caractérisé en ce que** la pluralité de modules d'évaluation (3, 12) calculent la somme des valeurs d'évaluation élaborées par chaque module, le moyen d'affichage (3,12, 11, 12) affichant l'identificateur de la version dont la somme des valeurs est la plus importante.

10. Appareil (1) de visualisation d'une pluralité de versions d'un document selon la revendication 9 ; **caractérisé en ce que** lors du calcul de la somme des valeurs d'évaluation, certaines valeurs d'évaluation au moins sont multipliées avec des valeurs définies par l'utilisateur de façon à attribuer plus ou moins d'importance à certains critères.

11. Appareil (1) de visualisation d'une pluralité de versions d'un document selon l'une quelconque des revendications 7 à 10 ; **caractérisé en ce que** chaque version reçue est fractionnée en une pluralité d'intervalles temporels de même durée au cours desquels une note d'évaluation fragmentaire est calculée, la note d'évaluation de la version reçue calculée par chaque module d'évaluation (3, 12) étant la moyenne des notes fragmentaires.

12. Appareil (1) de visualisation d'une pluralité de versions d'un document selon la revendication 11 ; **caractérisé en ce que** la note d'évaluation fragmentaire acquiert plus d'importance pour le calcul de la note d'évaluation si l'intervalle de temps associé correspond à un moment important du document.

**Patentansprüche**

1. Verfahren zur Auswahl einer Version aus einer Vielzahl von Versionen eines Dokuments, umfassend einen Schritt zur Einführung (2.1) eines Identifikators des besagten Dokuments bei einem Empfänger (1), der mit mindestens einem Kommunikationsnetz (6) verbunden ist, und einen Schritt zum Starten (2.2) einer Suche, um die Vielzahl von Versionen des im Empfänger identifizierten Dokuments zu empfangen; **dadurch gekennzeichnet, dass** es umfasst:

einen vorhergehenden Schritt zum Empfang (2.3) einer Vielzahl von mindestens teilweisen Versionen des besagten Dokuments innerhalb des Empfängers(1),
einen nachfolgenden Schritt zur Analyse (2.5) von jeder empfangenen Version durch eine Vielzahl von Bewertungsmodulen, die in dem Empfänger (1) vorhanden sind, wobei jedes Modul einen Bewertungswert der empfangenen Version entsprechend einem bestimmten Qualitätskriterium berechnet,
einen Schritt zur Auswahl (2.6) für jedes der Bewertungsmodule der Identifikatoren der Versionen, die die besten Bewertungswerte gemäß jedem Kriterium haben, und Anzeige (2.7) der besagten Identifikatoren von Versionen,
einen Schritt zur Eingabe (2.8) eines Befehls zur Auswahl eines der angezeigten Identifikatoren und Wiedergabe der mit diesem Identifikator verbundenen Version.

2. Verfahren zur Auswahl einer Version eines Dokuments nach Anspruch 1, **dadurch gekennzeichnet, dass** es einen Schritt zur Verzögerung umfasst, während dem der Empfänger auf die Ergebnisse der Suche wartet, der nachfolgende Schritt zur Analyse erst bei Beendigung der Verzögerung beginnt, eine später empfangene Version nicht berücksichtigt wird.

3. Verfahren zur Auswahl einer Version eines Dokuments nach Anspruch 1 oder 2, **dadurch gekennzeichnet, dass** es einen Schritt zur Berechnung der Summe von Bewertungswerten, die durch jedes Modul erstellt wurden, umfasst, und einen Schritt zur Auswahl einer einzigen Version, deren Summe der Bewertungswerte die größte ist.

4. Verfahren zur Auswahl einer Version eines Dokuments nach Anspruch 3, **dadurch gekennzeichnet, dass** bei der Berechnung der Summe der Bewertungswerte bestimmte Bewertungswerte mindestens mit durch den Nutzer festgelegten Werten multipliziert werden, um bestimmten Kriterien mehr oder weniger Bedeutung zuzuordnen.

5. Verfahren zur Auswahl einer Version eines Dokuments nach einem der vorstehenden Ansprüche, **dadurch gekennzeichnet, dass** jede empfangene Version in eine Vielzahl von Zeitintervallen derselben Dauer zerlegt wird, während welchen eine fragmentierte Bewertungsnote berechnet wird, wobei die Bewertungsnote der empfangenen Version der Durchschnitt der fragmentierten Noten ist.

6. Verfahren zur Auswahl einer Version eines Dokuments nach Anspruch 5, **dadurch gekennzeichnet, dass** die fragmentierte Bewertungsnote für die Berechnung der Bewertungsnote an Bedeutung gewinnt, wenn das verbundene Zeitintervall einem bedeutenden Moment des Dokuments entspricht.

7. Gerät (1) zur Visualisierung einer Vielzahl von Versionen eines Dokuments, das ein Mittel zur Eingabe (7, 8) eines Identifikators eines Dokuments und ein Mittel zum Senden (5) einer Suchanfrage an mindestens ein Kommunikationsnetzwerk umfasst, um die Vielzahl des identifizierten Dokuments zu empfangen, **dadurch gekennzeichnet, dass** es umfasst:

   ein Mittel zum Empfangen (5, 4) mindestens teilweise einer Vielzahl von Versionen des identifizierten Dokuments, wobei das besagte Mittel zum Empfangen (5, 4) nach dem Senden der Suchanfrage aktiviert wird.
   eine Vielzahl von Bewertungsmodulen (3, 12), von denen jedes ermöglicht, einen Bewertungswert von jeder erhaltenen Version entsprechend einem bestimmten Qualitätskriterium zu berechnen,
   ein Mittel zum Anzeigen (3, 12, 11, 12) der Identifikatoren der Versionen, die die besten Bewertungswerte gemäß jedem Kriterium haben, wobei das Mittel zur Eingabe (7, 8) eines Befehls die Auswahl einer der durch ein Modul ausgewählten Versionen und den Start der Wiedergabe der ausgewählten Version ermöglicht.

8. Gerät (1) zur Visualisierung einer Vielzahl von Versionen eines Dokuments nach Anspruch 7, **dadurch gekennzeichnet, dass** es einen Zeitschalter umfasst, der eine Dauer festlegt, während welcher das Gerät auf die Ergebnisse der Suche wartet, wobei die Vielzahl von Bewertungsmodulen (3, 12) erst bei Beendigung der Dauer aktiviert werden, keine später empfangene Version berücksichtigt wird.

9. Gerät (1) zur Visualisierung einer Vielzahl von Versionen eines Dokuments nach Anspruch 7 oder 8, **dadurch gekennzeichnet, dass** die Vielzahl von Bewertungsmodulen (3, 12) die Summe der durch jedes Modul erstellten Bewertungswerte berechnen, wobei das Mittel zum Anzeigen (3, 12, 11, 12) den Identifikator der Version anzeigt, deren Summe der Werte die größte ist.

10. Gerät (1) zur Visualisierung einer Vielzahl von Versionen eines Dokuments nach Anspruch 9, **dadurch gekennzeichnet, dass** bei der Berechnung der Summe der Bewertungswerte bestimmte Bewertungswerte mindestens mit durch den Nutzer festgelegten Werten multipliziert werden, um bestimmten Kriterien mehr oder weniger Bedeutung zuzuordnen.

11. Gerät (1) zur Visualisierung einer Vielzahl von Versionen eines Dokuments nach einem der Ansprüche 7 bis 10, **dadurch gekennzeichnet, dass** jede empfangene Version in eine Vielzahl von Zeitintervallen von gleicher Dauer aufgeteilt wird, während denen eine fragmentierte Bewertungsnote berechnet wird, wobei die Bewertungsnote der empfangenen Version, die durch jedes Bewertungsmodul (3, 12) berechnet wird, der Durchschnitt der fragmentierten Noten ist.

12. Gerät (1) zur Visualisierung einer Vielzahl von Versionen eines Dokuments nach Anspruch 11, **dadurch gekennzeichnet, dass** die fragmentierte Bewertungsnote für die Berechnung der Bewertungsnote mehr Bedeutung gewinnt, wenn das verbundene Zeitintervall einem bedeutenden Moment des Dokuments entspricht.

**Claims**

1. Method of selection of a version from a plurality of versions of a document comprising an introduction step (2.1) of an identifier of said document at the level of a receiver (1) connected to at least one communication network (6), and a step for the launch (2.2) of a search to receive the plurality of document versions identified in the receiver; **characterised in that** it comprises:

   A preliminary step for receiving (2.3) a plurality of at least partial versions of said document within the receiver (1), a subsequent analysis step (2.5) of each version received by a plurality of evaluation modules present in the receiver (1), each module calculating an evaluation score of the version received according to a determined criterion,
a step of selection (2.6) for each of the evaluation modules of the version identifiers having the best evaluation scores according to each criterion and display (2.7) of said version identifiers,
a step of introduction (2.8) of a selection command of one of the displayed identifiers and reproduction of the version associated with this identifier.

2. Method of selection of a version of a document according to claim 1, **characterised in that** it comprises a time delay step during which the receiver is waiting for the search results, the subsequent analysis step only starts at the end of the time delay, no version received subsequently is taken into account.

3. Method of selection of a version of a document according to claim 1 or 2, **characterised in that** it comprises a step for calculating the sum of evaluation scores created by each module, and a selection step of a single version, whose sum of evaluation scores is the highest.

4. Method of selection of a version of a document according to claim 3, **characterised in that** during the calculation of the sum of evaluation scores, some evaluation scores at least are multiplied with scores defined by the user to allocate more or less importance to some criteria.

5. Method of selection of a version of a document according to any one of the previous claims, **characterised in that** each version received is fragmented into a plurality of time intervals of the same duration during which a fragmentary evaluation score is calculated, the evaluation score of the version received being the mean of the fragmentary scores.

6. Method of selection of a version of a document according to claim 5, **characterised in that** the fragmentary evaluation score acquires more importance for the calculation of the evaluation score if the associated time interval corresponds to an important moment of the document.

7. Display device (1) of a plurality of versions of a document comprising a means of introduction (7, 8) of a document identifier and a means of transmission (5) of a search request to at least one communication network to receive the plurality of the document identified, **characterised in that** it comprises:

   a means of receiving (5, 4) at least partially a plurality of versions of said identified document, said receiving means (5, 4) being activated subsequently to the recovery of said search request,
   a plurality of evaluation modules (3, 12) enabling each one to calculate an evaluation score of each version received according to a determined quality criterion,
   a display means (3, 12, 11, 12) of version identifiers having the best evaluation scores according to each criterion, the means of introduction (7, 8) of a command enabling selection of one of the versions selected by a module and enabling the reproduction of the version selected to be launched.

8. Display device (1) of a plurality of versions of a document according to claim 7, **characterised in that** it comprises a timer defining a duration during which the device is waiting for the search results, the plurality of evaluation modules (3, 12) being activated only at the end of the duration, no version received subsequently is taken into account.

9. Display device (1) of a plurality of versions of a document according to claim 7 or 8, **characterised in that** the plurality of evaluation modules (3, 12) calculate the sum of evaluation scores created by each module, the display means (3, 12, 11, 12) displaying the identifier of the version whose sum of values is the highest.

10. Display device (1) of a plurality of versions of a document according to claim 9, **characterised in that** during the calculation of the sum of evaluation scores, some evaluation scores at least are multiplied with scores defined by the user to allocate more or less importance to some criteria.

11. Display device (1) of a plurality of versions of a document according to any one of claims 7 to 10, **characterised in that** each version received is fragmented into a plurality of time intervals of the same duration during which a fragmentary evaluation score is calculated, the evaluation score of the version received calculated by each evaluation score (3, 12) being the mean of the fragmentary scores.

12. Display device (1) of a plurality of versions of a document according to claim 11, **characterised in that** the fragmentary evaluation score acquires more importance for the calculation of the evaluation score if the associated time interval corresponds to an important moment of the document.

Fig. 1

EP 2 443 566 B1

DEBUT

| Introduction d'un identificateur de document | 2.1 |

| Lancement de la recherche de document | 2.2 |

| Réception de versions de parties du document | 2.3 |

Temporisation écoulée ?　2.4

**Fig. 2**

| Analyse de chaque version reçue par plusieurs modules d'évaluation | 2.5 |

| Classement des versions en fonction des valeurs d'évaluation | 2.6 |

| Affichage des meilleures versions en fonction de chaque critère d'évaluation | 2.7 |

| Sélection d'une version pour la reproduction | 2.8 |

**3.2** Document demandé : « Titanic » - Recherche effectuée pendant **4 heures** sur le réseau : **Internet -** Résultat : 6 versions trouvées

**3.1**

**3.3**

**Version 3 – source 1**
Effet de bloc :         ✳✳✳✳
Evaluation Flou :    ✳
Définition image : ✳✳
Qualité de l'audio:✳✳
Qualité contraste: -

**Version 2 – source 2**
Evaluation Flou :   ✳✳✳
Définition image :  ✳
Qualité de l'audio:✳✳
Qualité contraste: -
Effet de bloc :         -

**Version 1 – source 1**
Définition image : ✳✳✳✳
Qualité de l'audio:✳✳
Qualité contraste: ✳✳✳✳
Effet de bloc :         ✳✳
Evaluation Flou :   ✳

**Version 4 – source 4**
Qualité de l'audio:✳✳✳
Qualité contraste: ✳
Effet de bloc :         -
Evaluation Flou :   -
Définition image : ✳

**Version 1 – source 1**
Qualité contraste: ✳✳✳✳
Effet de bloc :         ✳✳
Evaluation Flou :   ✳
Définition image : ✳✳✳✳
Qualité de l'audio:✳✳

**3.4**

**Version 5 – source 5**

**Version 6 – source 3**

**Fig. 3**

EP 2 443 566 B1

**4.6**

**Vidéo de la version 4 – source 4**

Document demandé : « Titanic »  **4.2**

Recherche effectuée pendant **4 heures** sur le réseau : **Internet** Résultat : 6 versions trouvées  **4.3**

**4.4**

Version du document ayant la meilleure note selon les critères :

| Effet de-Bloc | Evaluation Flou | définition image | Qualité de l'audio | Qualité du contraste |
|---|---|---|---|---|
| ⋎ | ⋎ | ⋎ | ⋎ | ⋎ |
| Version 3 | Version 2 | Version 1 | Version 4 | Version 1 |
| Source 1 | source 2 | source 1 | source 4 | source 1 |

**4.1**

**4.5**

*La meilleure Version*

⋎

Version 1

source 1

**Fig. 4**

EP 2 443 566 B1

**EP 2 443 566 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009003124 A